(19) **Europäisches Patentamt**
**European Patent Office**
**Office européen des brevets**

(11) **EP 2 599 021 B1**

(12) **FASCICULE DE BREVET EUROPEEN**

(45) Date de publication et mention de la délivrance du brevet:
**22.03.2017 Bulletin 2017/12**

(51) Int Cl.:
**G01D 18/00** *(2006.01)* **G06F 15/00** *(2006.01)*
**G06F 17/50** *(2006.01)*

(21) Numéro de dépôt: **11732460.8**

(86) Numéro de dépôt international:
**PCT/EP2011/062119**

(22) Date de dépôt: **15.07.2011**

(87) Numéro de publication internationale:
**WO 2012/013517 (02.02.2012 Gazette 2012/05)**

(54) **PROCEDE DE DETERMINATION OPTIMALE DES CARACTERISTIQUES ET DE LA DISPOSITION D'UN ENSEMBLE DE SENSEURS DE SURVEILLANCE D'UNE ZONE**

VERFAHREN ZUR OPTIMALEN BESTIMMUNG DER EIGENSCHAFTEN UND ANORDNUNG EINER REIHE VON SENSOREN ZUR ÜEBRWACHUNG EINES BEREICHS

METHOD FOR OPTIMALLY DETERMINING THE CHARACTERISTICS AND ARRANGEMENT OF A SET OF SENSORS FOR MONITORING AN AREA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2010 FR 1003147**

(43) Date de publication de la demande:
**05.06.2013 Bulletin 2013/23**

(73) Titulaire: **THALES**
**92400 Courbevoie (FR)**

(72) Inventeurs:
• **LEMER, Alain**
**F-92704 Colombes Cedex (FR)**
• **YWANNE, Frédérique**
**F-92704 Colombes Cedex (FR)**

(74) Mandataire: **HAMMES, Pierre et al**
**Marks & Clerk France**
**Immeuble Visium**
**22, avenue Aristide Briand**
**94117 Arcueil Cedex (FR)**

(56) Documents cités:
**US-A1- 2008 007 720**

• **RABIE RAMADAN, HESHAM EL-REWINI, KHALED ABDELGHANY: "Optimal and Approximate Approaches for Deployment of Heterogeneous Sensing Devices", EURASIP JOURNAL ON WIRELESS COMMUNICATIONS AND NETWORKING 2007 HINDAWI PUBLISHING CORPORATION US, vol. 2007, ID 54731, 2007, pages 1-14, XP002634589, DOI: DOI:10.1155/2007/54731**
• **RUTENBAR R A: "SIMULATED ANNEALING ALGORITHMS: AN OVERVIEW", IEEE CIRCUITS AND DEVICES MAGAZINE, IEEE SERVICE CENTER, PISCATAWAY, NJ, US, vol. 5, no. 1, 1 janvier 1989 (1989-01-01) , pages 19-26, XP000033521, ISSN: 8755-3996, DOI: DOI:10.1109/101.17235**
• **NGATCHOU P N ET AL: "Multiobjective Multistatic Sonar Sensor Placement", EVOLUTIONARY COMPUTATION, 2006. CEC 2006. IEEE CONGRESS ON VANCOUVER, BC, CANADA 16-21 JULY 2006, PISCATAWAY, NJ, USA,IEEE, PISCATAWAY, NJ, USA, 16 juillet 2006 (2006-07-16), pages 2713-2719, XP010936698, DOI: DOI:10.1109/CEC.2006.1688648 ISBN: 978-0-7803-9487-2**

EP 2 599 021 B1

Printed by Jouve, 75001 PARIS (FR)

**Description**

La présente invention a pour objet un procédé de détermination des caractéristiques et de la disposition d'un ensemble de senseurs ou capteurs de surveillance d'une zone d'intérêt.

Elle s'applique notamment pour l'aide à la conception d'un système de surveillance d'une zone d'intérêt par un réseau de capteurs fixes et pour la détermination de la position et du réglage optimums de ces capteurs dans la zone sous un ensemble de contraintes données.

L'invention s'applique à tout type de senseur ou capteur en particulier une caméra, un radar, un capteur sismique, acoustique ou encore un dispositif de détection de mouvement.

Le problème technique visé par la présente invention concerne l'allocation automatique d'un ensemble de capteurs, fonctionnant en réseau, de façon adaptée à la surveillance d'une zone d'intérêt prédéfinie. Ce problème est notamment rencontré par un concepteur de système de surveillance ou un utilisateur d'un tel système. Il consiste, à partir d'un ensemble de capteurs disposant chacun de caractéristiques spécifiques selon des technologies particulières, d'un ensemble de contraintes absolues à respecter et d'un ensemble de propriétés que l'on souhaite optimiser, à déterminer la combinaison, en nombre et type parmi ceux disponibles, de capteurs permettant de satisfaire ces contraintes absolues et d'optimiser ces propriétés. Un second problème vise également à déterminer la position et le réglage optimums des capteurs préalablement déterminés au sein de la zone de surveillance de façon à optimiser les performances pour des ressources contraintes.

Le réseau de capteurs choisis doit respecter une ou plusieurs contraintes absolues, par exemple, un budget maximal, une réserve énergétique maximale, un emport maximal ou des performances de détection minimales.

Les propriétés à optimiser sont, par exemple, le prix total du système, une probabilité de détection de cible, une précision de localisation en deux ou trois dimensions. Les propriétés sont classées empiriquement par importance relative.

Le problème technique visé par la présente invention est un problème d'optimisation multicritères sous contrainte d'un ensemble de fonctions hétérogènes de coût de complexité arbitraire. Ces fonctions pouvant être de nature diverse, analytiques ou non, continues ou non, dérivables ou non. Certaines contraintes peuvent être exprimées par des fonctions simples. Par exemple, le prix total du système correspond à une simple somme des prix de ses constituants. De même le poids total du système est également obtenu par la somme des poids de chaque capteur. En revanche, d'autres contraintes sont modélisées par des fonctions plus complexes. Ainsi la probabilité de détection d'une cible peut dépendre d'une densité de probabilité à priori de présence de la cible, de la distance cible-capteur voire de l'intervisibilité. La précision de localisation par fusion entre capteurs peut mettre en jeu les probabilités de détection, les précisions de mesures élémentaires et les positions relatives des capteurs entre eux.

Les solutions de l'art antérieur qui répondent au problème de l'optimisation de réseaux de capteurs concernent essentiellement le déploiement de réseaux de senseurs sans fils et visent une optimisation des moyens de communications. La problématique ainsi visée concerne en particulier le maintien du service et l'autonomie des antennes et non pas l'optimisation de la couverture d'une zone de surveillance en fonction de contraintes diverses sur les capteurs.

Concernant la problématique du positionnement optimal de capteurs de surveillance, la demande de brevet US 7395195 propose un dispositif permettant la représentation d'un réseau de senseurs, l'allocation de ressources de calcul et le positionnement des dits capteurs. La demande de brevet US 7693049 met en oeuvre une technique d'optimisation stochastique essentiellement focalisée sur la conservation des ressources en énergie.

Outre le fait que les deux demandes précitées ne visent qu'une partie du problème plus large que propose de résoudre la présente invention, elles présentent également des limitations vis-à-vis des contraintes d'optimisation qu'elles peuvent prendre en compte. De façon générale, les méthodes connues mettent en oeuvre des méthodes d'optimisation classiques telles la méthode du gradient. De telles méthodes présentent les inconvénients suivants. Elles n'apportent une solution au problème global d'optimisation que si les contraintes d'optimisation sont modélisées par des fonctions dérivables ce qui représente une limitation importante que vise à supprimer la présente invention. De plus ces méthodes ne permettent pas d'éviter les phénomènes de minima ou maxima locaux qui représentent des solutions non satisfaisantes. Il est également possible d'utiliser des méthodes basées sur un algorithme génétique, mais ces dernières ne sont pas applicables à toutes les fonctionnelles de coût et ne garantissent pas la convergence vers une solution valide dans tous les cas.

L'article "Optimal and Approximate Approaches for Deployment of Heterogeneous Sensing Devices" de Rabie Ramadan, Hesham El-Rewini et Khaled Abdelghany dans EURASIP Journal on Wireless Communications and Networking, Volume 2007, Article ID 54731, 14 pages, doi: 10.1155/2007/54731 décrit un procédé de détermination optimale de la disposition d'un ensemble de senseurs de surveillance d'une zone. Le problème d'optimisation sous-jacent est résolu par un un algorithme génétique.

La présente invention permet de supprimer les limitations de l'art antérieur en proposant une solution complètement automatisée de détermination des capteurs en nombre, type et position.

A cet effet, l'invention a pour objet un procédé itératif, mis en oeuvre par ordinateur, de conception optimisée d'un système de surveillance d'une zone géographique comportant une pluralité de capteurs de types et caractéristiques différents représentés par un vecteur S dont chaque composante indique le type et les caractéristiques d'un capteur et sa position dans ladite zone, ledit système présentant une pluralité de contraintes techniques absolues, ledit procédé étant caractérisé en ce qu'il comporte au moins les étapes suivantes :

    ◦ une étape d'initialisation du vecteur S à une solution $S_0$,

    ◦ une étape de perturbation des capteurs composant la solution $S_n$ à l'itération d'indice n, pour obtenir une nouvelle solution candidate $s_{n+1}$ à l'itération d'indice n+1, ladite perturbation entrainant le changement du type ou d'une caractéristique d'au moins un desdits capteurs, les types de capteurs possibles incluant également un type fictif dont les caractéristiques sont sans impact sur le coût global de la solution S,

    ◦ une étape d'évaluation du coût de ladite solution $s_{n+1}$ à partir d'une fonction de coût global C(S) déterminée comme une combinaison d'une pluralité de sous-critères $C_k(S)$ d'optimisation d'au moins une caractéristique desdits capteurs qui composent la solution S,

    ◦ une étape de sélection de la nouvelle solution courante $S_{n+1}$ à l'itération n+1 à partir d'une probabilité de transition $P_{transition} = \eta(C(S_n),C(S_{n+1}))$ décroissante en fonction de $(C(s_{n+1})-C(S_n))$ aboutissant à la sélection de la nouvelle solution candidate $S_{n+1}= s_{n+1}$ ou à la conservation de la solution précédente $S_{n+1}=S_n$,

    ◦ une étape de mémorisation, à chaque itération, de la meilleure solution $S_{best}$ obtenue qui vérifie la relation :

$$\text{si } C(s_{n+1}) < C(S_{best}), S_{best} = S_{n+1},$$

    ◦ une étape de test d'arrêt ou de poursuite des itérations dudit procédé,

    ◦ lorsque le test d'arrêt est positif, une étape finale de production de la solution $S_{best}$ optimale contenant le nombre, le type, les caractéristiques et la position des capteurs adaptés à surveiller ladite zone géographique.

Dans une variante de réalisation de l'invention, le procédé comporte en outre une étape d'affichage des positions desdits capteurs composant la solution $S_{best}$ optimale dans la zone géographique sur une interface utilisateur.

Dans une autre variante de réalisation de l'invention, l'étape d'initialisation comporte au moins les sous-étapes suivantes :

    ◦ tirage aléatoire du type de chacun desdits capteurs parmi les types disponibles y compris le type fictif,

    ◦ tirage aléatoire de la position de chacun desdits capteurs,

    ◦ vérification du respect, par la solution $S_0$, de toutes les contraintes absolues

Dans une autre variante de réalisation de l'invention, lesdits capteurs sont de type passifs et sont au moins pris dans l'ensemble suivant : une caméra, un radar, un capteur sismique, un capteur acoustique, un dispositif de détection de mouvement, un dispositif de détection par contact électrique, un dispositif de détection de sources radioélectriques, un dispositif de détection de sources nucléaires, un dispositif de détection magnétique, capacitive, inductive, chimique ou bactériologique.

Dans une autre variante de réalisation de l'invention, lesdits capteurs sont de type actifs et sont au moins pris dans l'ensemble suivant : un radar, un détecteur acoustique actif, un détecteur LIDAR, un détecteur par activation neutronique, un détecteur par barrière active.

Dans une autre variante de réalisation de l'invention, une contrainte technique absolue est une contrainte de poids maximal ou de prix maximal ou de précision de localisation minimum sur une zone géographique donnée.

Dans une autre variante de réalisation de l'invention, une caractéristique d'un capteur comprend son poids, son prix, sa probabilité de détection d'une cible, son rayon de détection.

Dans une autre variante de réalisation de l'invention, un sous-critère d'optimisation est le poids global de l'ensemble desdits capteurs ou le prix global de l'ensemble des dits capteurs ou le taux de couverture de la zone surveillée ou la précision de localisation d'une cible dans la zone surveillée, ledit sous-critère étant évaluable numériquement pour l'ensemble des capteurs composant la solution S.

Dans une autre variante de réalisation de l'invention, au moins un des sous-critères dépend d'une carte d'importance qui attribue pour chaque maille, de coordonnées i,j, de la zone géographique à surveiller, une valeur d'importance relative croissante avec le besoin de surveillance de ladite maille.

Dans une autre variante de réalisation de l'invention, au moins une des conventions suivantes est appliquée aux sous critères :

    ◦ l'optimisation des sous-critères est soit une minimisation soit une maximisation,

○ la valeur de chaque sous-critère est normalisée entre 0 et 1.

Dans une autre variante de réalisation de l'invention, la fonction de coût global de la solution S s'exprime à l'aide de la relation suivante :

$$C(S) = \beta \sqrt{\frac{\sum_{k=1}^{K} \lambda_k \|C_k(S)\|^{\alpha_k}}{\sum_{k=1}^{K} \lambda_k}},$$

où $\lambda_k$ est un coefficient de pondération, $\beta$ et $\alpha_k$ sont des paramètres donnés.

Dans une autre variante de réalisation de l'invention, la probabilité de transition s'exprime à l'aide des relations suivantes :

$$\eta(C(S_n), C(s_{n+1})) = 1, \text{ si } C(s_{n+1}) < C(S_n)$$

$$\eta(C(S_n), C(s_{n+1})) = e^{\frac{C(S_n) - C(s_{n+1})}{T(n)}}, \text{ si } C(s_{n+1}) \geq C(S_n),$$

avec T(n) un paramètre ayant pour effet de rendre moins probable l'acceptation d'une solution moins bonne à l'itération n et respectant la relation suivante T(n+1)=ρT(n), où ρ est un paramètre donné dont la valeur est inférieure à 1 et sensiblement proche de 1.

L'invention a également pour objet un produit programme d'ordinateur caractérisé en ce qu'il comprend des instructions de code de programme pour la mise en oeuvre du procédé selon l'invention.

D'autres caractéristiques apparaîtront à la lecture de la description détaillée donnée à titre d'exemple et non limitative qui suit faite en regard de dessins annexés qui représentent :

La figure 1, un exemple de carte d'importance selon l'invention,
La figure 2, un organigramme illustrant les étapes de mise en oeuvre du procédé selon l'invention,
La figure 3, une illustration des résultats obtenus pour une zone de surveillance uniforme carrée et un seul type de capteur,
La figure 4, une illustration des résultats obtenus pour une zone de surveillance uniforme carrée et un quatre types de capteurs,
La figure 5, une illustration des résultats obtenus pour la zone de surveillance de la figure 1 et un type de capteur,
La figure 6, une illustration des résultats obtenus pour la zone de surveillance de la figure 1 et deux types de capteur

## Carte d'importance

Un mode de réalisation particulier de l'invention est décrit à présent. Il concerne l'optimisation d'un système de surveillance d'une zone de géométrie définie par un rectangle. L'invention s'applique de façon identique à tout type de zone d'intérêt de géométrie quelconque. La zone de surveillance de forme rectangulaire est découpée en une pluralité de mailles élémentaires également de forme rectangulaire. L'ensemble des mailles constitue une grille. Chaque maille de la grille est identifiée par ses coordonnées i et j. Sans sortir du cadre de l'invention, la forme d'une maille peut être quelconque.

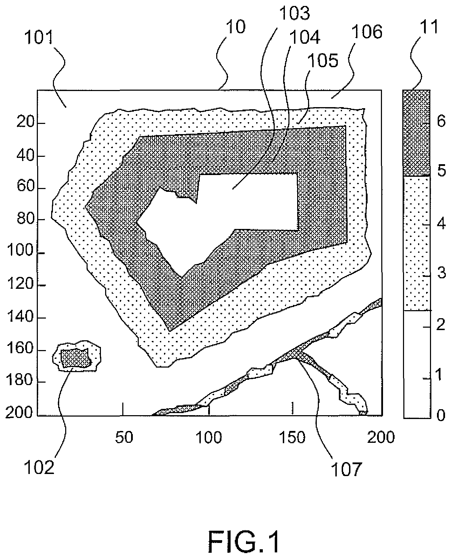

La figure 1 représente un exemple de carte d'importance selon l'invention. Une carte d'importance a pour fonction l'identification de zones d'importance relative au sein de la zone à surveiller. Certaines contraintes d'optimisation des capteurs dépendent de la zone couverte. Or cette zone peut, d'une part, être délimitée par des périmètres complexes à expliciter analytiquement et d'autre part, ne pas être d'importance uniforme en terme opérationnel. Dans une étape préalable, le procédé selon l'invention consiste à construire la carte d'importance 10 associée à la zone de surveillance visée. Pour chaque maille de la carte d'importance repérée par ses deux coordonnées i et j, une valeur d'importance C(i,j) est attribuée. Cette valeur est nulle pour les éléments de la zone qui n'ont pas vocation à être surveillés. De cette façon, les surfaces à surveiller peuvent être de forme arbitrairement complexe. La valeur C(i,j) est non nulle et de valeur d'autant plus élevée que la zone à surveiller présente un intérêt élevé. En particulier, l'intérêt de surveillance d'une zone est déterminé en fonction de la probabilité d'y trouver une cible ou de la sensibilité de la zone du point de vue de la surveillance. Si aucune information n'est associée à une zone, sa valeur d'importance C(i,j) est égale à une valeur uniforme, par exemple la valeur 1. Une fois l'ensemble des valeurs C(i,j) déterminées pour toutes les mailles, elles sont normalisées par la somme de toutes les valeurs C(i,j). La carte d'importance selon l'invention ainsi déterminée donne, pour chaque maille, une information d'importance relative vis-à-vis de sa surveillance. L'échelle 11 des valeurs de C(i,j) varie de 0 à 1. La zone de surveillance 10 comporte des secteurs non surveillés 101,103, des zones d'importance secondaires 105,106 et des zones d'importance prioritaires 102,104,107.

## Capteurs

Le procédé selon l'invention a notamment pour objectif de produire une solution à un problème d'optimisation sous plusieurs contraintes. A cet effet, une solution est constituée par un ensemble de $N_{max}$ capteurs représentés par un vecteur. Ces capteurs sont de type et de position variables. Des capteurs de type et position fixes peuvent également être considérés mais ils ne font pas partie du vecteur solution produit par le procédé selon l'invention. Ils interviennent cependant dans le calcul des fonctionnelles de coût développés plus en amont de la description. A titre d'exemple la liste suivante inclue un grand nombre de capteurs compatibles du procédé selon l'invention. Sans sortir du cadre de l'invention tout capteur équivalent est envisageable. L'invention s'applique aussi bien à des capteurs passifs que des détecteurs actifs.

Les capteurs passifs regroupent notamment les caméras visible ou infra-rouge avec détection de mouvement datée ou non, localisation angulaire ou reconnaissance de scène, les détecteurs acoustiques tels microphones ou hydrophones qui peuvent détecter une présence, effectuer une localisation angulaire et/ou en distance et effectuer une reconnaissance de son, les détecteurs sismiques ponctuels, tel un géophone, les détecteurs linéiques tel un câble piezo-électrique. De tels détecteurs sismiques peuvent effectuer une détection datée ou non ainsi qu'une reconnaissance de bruit sismique. Les capteurs passifs compatibles de la présente invention englobent également les capteurs de type PIR (Passive Infra Red) qui ont également la capacité d'effectuer une localisation, les détecteurs par contact électrique ou rupture de contact, les détecteurs de mouvement de type accéléromètres ou inclinomètres, les détecteurs de sources radioélectriques, de sources nucléaires, les radars passifs ainsi que tout équipement mettant en oeuvre une détection magnétique, capacitive, inductive, chimique ou bactériologique.

Les détecteurs actifs englobent notamment les radars, les détecteurs acoustiques actifs de type aérien et sonar, les détecteurs par laser aéroporté de type LIDAR (« Light Détection and Ranging ») et les équipements effectuant une détection par activation neutronique ou par barrière active infra-rouge, acoustique ou visible.

On note T le nombre de types de capteurs distincts. Chaque type de capteurs possède des caractéristiques intrinsèques qui interviennent dans le critère d'évaluation de la qualité d'une solution obtenue par le procédé. Les caractéristiques d'un capteur sont définies par l'ensemble des paramètres décrivant totalement un type de capteur au sens d'une fonction de coût globale. Ces caractéristiques peuvent être fixes lorsqu'il s'agit de paramètres intrinsèques au capteur comme l'ouverture angulaire d'une caméra ou des fonctions de calculs internes comme le mode de calcul d'inter-visibilité entre capteur et point surveillé. Les caractéristiques d'un capteur peuvent également être réglables par le biais d'un procédé. C'est le cas par exemple pour l'axe de visée d'une caméra.

Le type d'un capteur désigne une classe de capteurs possédant des caractéristiques fixes communes. Plusieurs instances d'un même type de capteur ne diffèrent que par leurs caractéristiques variables.

Le type d'un capteur peut être, mais pas uniquement, une caméra, un radar, un capteur sismique, acoustique ou encore un dispositif de détection de mouvement. Les caractéristiques desdits capteurs peuvent être fixes, tel est le cas du poids ou du volume d'un capteur mais également de son champ angulaire d'observation ou de la nature des mesures élémentaires réalisées. De telles mesures incluent le niveau énergétique absolu ou en rapport signal sur bruit, des mesures d'angles en gisement site ou d'Euler, des mesures de vitesse, de distances, de spectre fréquentiel ou encore de classe de cible détectée.

D'autres caractéristiques peuvent évoluer en fonction de la solution. C'est le cas du prix qui peut être dégressif en fonction de la quantité de capteurs du même type utilisés dans la solution. Certains capteurs sont caractérisés par une courbe de performance. C'est le cas notamment de la probabilité de détection d'une cible en fonction de la distance entre le capteur et la cible mais aussi de la précision de mesure d'un capteur en fonction de sa portée et du rapport signal à bruit. Chaque type de capteur disponible est ainsi défini en fonction d'une ou plusieurs caractéristiques afin de constituer un ensemble de capteurs disponibles qui sert de donnée d'entrée au procédé selon l'invention. A cet ensemble de T types de capteurs réels, on ajoute un capteur de type fictif identifié par le type 0. Ce capteur est sans impact sur le critère de coût global, c'est-à-dire que ses caractéristiques sont neutres. Par exemple son prix, son poids et sa portée sont nulles. Une solution fournie par le procédé d'optimisation selon l'invention est constituée par un vecteur de $N_{max}$ capteurs qui sont représentés par leur type indexé par une valeur variant de 0 à T. Un type regroupe toutes les caractéristiques intrinsèques du capteur. La solution comporte également pour chacun desdits capteurs des informations relatives à sa position (coordonnées dans le plan ou dans l'espace) et/ou son orientation (direction de pointage du capteur). Par la suite on notera S le vecteur solution produit par le procédé selon l'invention.

**Contraintes absolues**

Le réseau de capteurs est déterminé, notamment, en fonction d'un ensemble de M contraintes absolues à respecter qui constituent une autre donnée d'entrée du procédé selon l'invention. Les contraintes absolues à respecter par le réseau de capteurs choisis sont prises dans l'ensemble suivant : un poids total minimal ou maximal de l'ensemble des capteurs composant le réseau, un prix total minimal ou maximal, une borne sur la position de déploiement d'un type de capteur donné, un nombre minimal ou maximal de capteurs d'un type donné, une distance minimale ou maximale entre deux capteurs d'un même type, une durée de vie minimale ou maximale d'un capteur, une réserve énergétique maximale d'un capteur, une limite sur l'orientation d'un capteur, une limite sur le retard de transmission de l'information vers un poste de commandement, une contrainte de déploiement tel une distance minimale d'un type de capteur par rapport à un élément du terrain ou encore des performances minimales du réseau en termes de portée de détection, de localisation ou de classification. L'ensemble des contraintes listées n'est bien entendu nullement limitatif et toute autre contrainte absolue relative à un capteur qui soit équivalente est envisageable sans sortir du cadre de l'invention. De façon générale, chaque contrainte absolue est modélisée par une fonction, par exemple une fonction booléenne, $\psi_m(S)$ permettant de vérifier si chaque contrainte m est vérifiée ou non pour la solution S. La solution S est acceptable si et seulement si quelque soit m variant de 1 à M, $\psi_m(S)=1$. A titre d'exemple, la fonction $\psi_m$ associée à la contrainte de poids vaut 0 si la somme des poids de tous les capteurs constituant la solution S est supérieure à un poids maximum donné. $\psi_m$ vaut 1 dans le cas contraire. De façon analogue, toute contrainte absolue peut être modélisée par une fonction $\psi_m$.

**Critères d'optimisation**

La solution S optimale est déterminée en fonction d'un nombre K de sous-critères qui constituent un autre ensemble de données d'entrée du procédé selon l'invention. Un sous-critère correspond à une caractéristique ou une combinaison de caractéristiques d'un ou plusieurs capteurs composant la solution S. Un sous-critère est une fonction numériquement évaluable contribuant au calcul d'une fonction de coût globale au réseau de capteurs. Elle est interprétable par l'utilisateur du procédé selon l'invention, dans le but d'en pondérer l'importance relative dans le coût global à optimiser. Les exemples de sous-critères suivants sont applicables au procédé selon l'invention, ainsi que tout équivalent à l'un de ces sous-critères. Il s'agit du poids total de la solution, du coût total de la solution, de la probabilité de détection maximale sur une zone, de la probabilité de détection moyenne sur l'ensemble de la zone, de l'erreur de localisation minimale sur une zone, de l'erreur de localisation moyenne sur l'ensemble de la zone, de la somme des distances inter-capteurs, du chemin minimal entre un point fixe de la carte et chaque capteur, du retard de transmission de l'information de détection pour l'ensemble des capteurs d'une zone, de la consommation totale de l'ensemble des capteurs mais aussi des contraintes composites faisant intervenir des éléments arbitrairement complexes comme la minimisation de l'altitude moyenne des capteurs situés à une distance donnée d'une partie de la zone surveillée.

Ce sous-critère doit être optimisé, par exemple minimisé ou maximisé. Le terme optimisation est utilisé pour désigner la recherche d'un extremum, maximum ou minimum.

A titre d'exemple non limitatif, le mode de réalisation choisi ici utilise K=4 sous critères. Un premier sous-critère correspond au poids global de l'ensemble des capteurs constituant la solution S. Ce premier sous-critère est modélisé par la fonction suivante :

$$C_1'(S) = \sum_{n=1}^{N_{max}} poids(n) \quad (1)$$

où poids(n) est le poids de chaque capteur de la solution S. Le procédé selon l'invention vise à obtenir une solution S qui minimise le sous-critère $C_1'(S)$. Un deuxième sous-critère correspond au prix global de la solution S retenue. Il peut être modélisé par la fonction suivante :

$$C_2'(S) = \sum_{n=1}^{N_{max}} prix(n) \quad (2)$$

où prix(n) est le prix unitaire de chaque capteur de la solution S. Le procédé selon l'invention vise à obtenir une solution S qui minimise le sous-critère C'$_2$(S).

Un troisième sous-critère correspond au taux de couverture de la zone effectivement surveillée par le réseau de capteurs que constitue la solution S. Le taux de couverture est défini, par exemple, comme étant la fraction de la zone surveillée qui garantit une probabilité de détection supérieure à une valeur donnée θ. Ce troisième sous critère est modélisé par la fonction suivante :

$$C'_3(S) = \frac{\sum_{i,j}^{R} \zeta(i,j) CI(i,j)}{N_c N_L \sum_{i,j}^{R} CI(i,j)} \quad (3)$$

où $N_C N_L$ est le nombre de mailles de la carte d'importance de dimension R et $\zeta(i,j)$=1 si la probabilité de détection $P_D(i,j)$ d'une cible située dans la maille de coordonnées i,j, de la carte d'importance est supérieure strictement à θ et $\zeta(i,j)$ = 0 dans le cas contraire. CI(i,j) représente la valeur d'importance de la carte d'importance au point de coordonnées i.j. La probabilité de détection $P_D(i,j)$ est déterminée en fonction de la probabilité de détection unitaire et de la position de chaque capteur. A titre d'exemple, pour un capteur optronique la probabilité de détection peut être obtenue par lancer de rayons à partir de la position du capteur jusqu'à interception par un masque ou atteinte d'une portée d'usage. Pour un capteur acoustique, la probabilité de détection peut être calculée par application de l'équation connue du sonar à un modèle de bruit rayonné par la cible. Le sous-critère C'$_3$(S) dépend à la fois des caractéristiques de chaque capteur mais également de la valeur d'importance CI(i,j) associée à chaque maille de la carte d'importance correspondant à la zone de surveillance. D'autres critères de ce type peuvent être envisagés sans sortir du cadre de l'invention.

Un quatrième sous-critère correspond à la précision de localisation d'une cible qui peut être définie comme étant l'erreur moyenne de localisation sur toute la zone de couverture. La localisation d'une cible est obtenue par fusion de plusieurs mesures délivrées par plusieurs capteurs. Ce sous-critère dépend ainsi lui-même du troisième sous-critère relatif au taux de couverture. Il est construit à partir d'une estimation locale de l'erreur de localisation à l'aide de la borne théorique connue de Cramer Rao et dépend, notamment, de la position relative de l'ensemble des capteurs en portée de détection au point de coordonnées i,j. Cet exemple montre que plusieurs sous-critères peuvent être interdépendants. Le sous-critère relatif à la précision de localisation peut être modélisé par la relation suivante :

$$C'_4(S) = \frac{\sum_{i,j}^{\zeta(i,j)>0} Erreurloc(i,j) CI(i,j)}{\sum_{i,j}^{\zeta(i,j)>0} CI(i,j)} \quad (4)$$

Une erreur très élevée peut être affectée en tout point où une localisation est impossible.

Les exemples précités de sous-critères illustrent leur diversité. Les deux premiers sous-critères sont de simples sommes alors que le troisième sous-critère dépend de la disposition des capteurs mais aussi, éventuellement, des obstacles entre le capteur et la cible. Enfin le quatrième sous-critère illustre la possibilité de subordonner le calcul d'un sous-critère à un autre.

Dans un mode de réalisation de l'invention, des conventions sont établies pour la modélisation des sous-critères. Une première convention consiste à concevoir les sous-critères de telle sorte que l'optimisation soit une minimisation pour tous les sous-critères ou une maximisation pour tous les sous-critères. Si l'optimisation est une minimisation, le troisième sous-critère précédemment décrit doit être remplacé par C$_3$ = 1-C'$_3$. Une deuxième convention consiste à normaliser entre 0 et 1 chaque sous-critère pour les rendre homogènes. Les premier, second et quatrième sous-critères se réécrivent alors de la façon suivante :

$$C_1(S) = \frac{C'_1(S)}{PoidsMax}, C_2(S) = \frac{C'_2(S)}{\Pr ixMax}, C_4(S) = \frac{C'_4(S)}{ErreurMax}$$

où PoidsMax et PrixMax sont les poids et prix à ne pas dépasser. ErreurMax est l'erreur de localisation maximum admissible pour garantir des performances raisonnables pour le système. Une troisième convention consiste à affecter une grande valeur arbitraire à un sous-critère s'il correspond à une contrainte absolue non respecté, dans le cas où l'optimisation est une minimisation.

A partir des K sous-critères $C_k(S)$, une des étapes que comporte le procédé selon l'invention vise à déterminer une fonctionnelle de coût global qui peut s'écrire à l'aide de la relation suivante :

$$C(S) = \sqrt[\beta]{\frac{\sum_{k=1}^{K} \lambda_k \left\| C_k(S) \right\|^{\alpha_k}}{\sum_{k=1}^{K} \lambda_k}} \quad (5)$$

 Les coefficients $\alpha_k$ permettent de moduler non linéairement l'impact d'un sous-critère selon sa valeur. Les coefficients $\lambda_k$ positifs permettent de pondérer relativement chaque sous-critère par rapport aux autres. Parmi les cas particuliers, si $\beta = \alpha_k = 1$ quelque soit k alors C(S) correspond à une combinaison linéaire des sous-critères $C_k(S)$. A l'inverse si $\beta = \alpha_k$ tend vers l'infini, le critère global C(S) tend vers le maximum des sous-critères $C_k(S)$.

La relation (5) est un exemple de modélisation du critère global. Sans sortir du cadre de l'invention, toute relation C(S) déterminée comme une combinaison des sous-critères $C_k(S)$ est compatible de l'invention. En particulier la fonction C(S) n'est pas forcément continue ni dérivable en tout point où elle est définie.

Le procédé selon l'invention vise notamment à déterminer la solution S qui minimise (ou maximise) la fonction de coût global C(S) tout en respectant les contraintes absolues préalablement définies. Les méthodes connues basées sur l'emploi de gradients ne sont pas compatibles de fonction de coût non dérivables et qui peuvent présenter des extrema locaux. L'invention consiste, pour résoudre ces limitations, à adapter l'algorithme connu dit du « recuit simulé » pour résoudre le problème d'optimisation associé à la fonction de coût C(S).

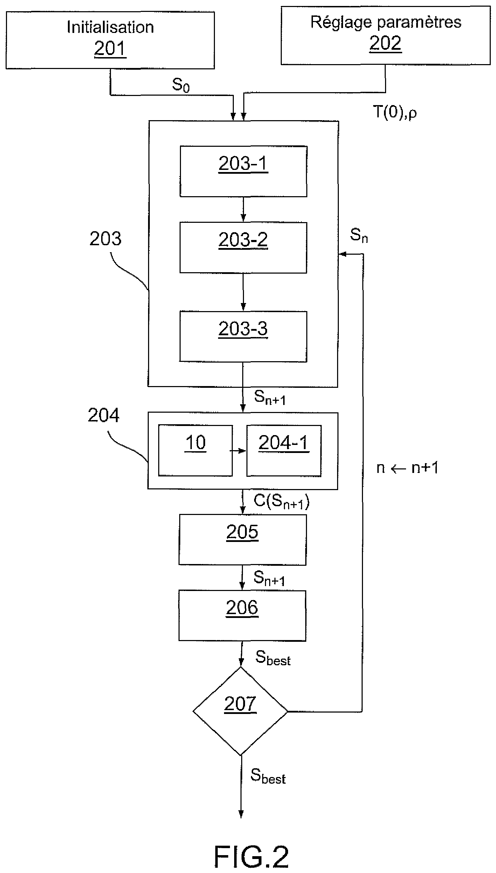

La figure 2 représente un organigramme des étapes de réalisation du procédé selon l'invention.

Dans une première étape d'initialisation 201, une solution initiale $S_0$ candidate est sélectionnée. Elle comporte, comme toute solution S, un ensemble de $N_{max}$ capteurs définis par leur type, leur position et leurs caractéristiques techniques. Parmi les $N_{max}$ capteurs, certains peuvent être des capteurs de type fictif dont le poids relatif est nul vis-à-vis des contraintes d'optimisation. La présence de capteurs de type fictif dans une solution S permet de déterminer également le nombre optimum de capteurs puisqu'un capteur fictif ne sert qu'à la résolution du problème mais ne correspond pas à un capteur réellement déployé sur le terrain.

La solution $S_0$ initiale est déterminée par exemple comme étant composée uniquement de capteurs fictifs. Cette solution est valide puisque par construction les capteurs fictifs respectent les contraintes absolues prédéfinies. Les positions des capteurs fictifs sont tirées aléatoirement dans la zone de surveillance. Alternativement, la solution $S_0$ initiale peut aussi être déterminée par tirage aléatoire de chaque type et position des $N_{max}$ capteurs incluant le capteur fictif comme une des possibilités. La solution $S_0$ obtenue est testée vis-à-vis des contraintes absolues. Si la solution n'est pas acceptable de ce point de vue, une nouvelle solution est tirée aléatoirement jusqu'à obtenir une solution compatible des contraintes absolues.

La solution $S_0$ est ensuite mémorisée comme étant, temporairement, la solution $S_{best}$ qui correspond à la meilleure optimisation possible du problème. En parallèle de cette étape d'initialisation, une étape de réglage initial 202 des paramètres de l'algorithme d'optimisation est effectuée. Pour un algorithme dit du « recuit simulé », il s'agit d'un paramètre positif de convergence T(0) dit de température qui est fixé initialement, par exemple, à 1 et d'un paramètre dit de « refroidissement » p, positif et inférieur ou égal à 1. Les valeurs de ces paramètres influent directement sur la vitesse de convergence de l'algorithme et sa capacité à trouver des optima globaux. Une température et un paramètre de refroidissement initiaux trop faibles conduisent à converger très rapidement vers des minima ou maxima locaux. A l'inverse, des valeurs élevées de ces paramètres permettent de converger vers des optima globaux mais les temps de calculs sont plus longs.

Le procédé selon l'invention est ensuite itératif. Une itération consiste à réaliser les étapes suivantes.

Dans une étape 203, une solution $S_{n+1}$ différente de la solution courante $S_n$ est recherchée. Pour cela, la solution courante $S_n$ est perturbée pour en déduire une solution intermédiaire $S'_{n+1}$ pour chaque capteur d'indice i variant de 1 à $N_{max}$ constituant la solution $S_n$

Dans une première sous-étape 203-1, une perturbation du type de chaque capteur est provoquée. Pour cela, une valeur aléatoire uniforme comprise entre 0 et 1 est générée. Si la valeur obtenue est inférieure à une probabilité donnée de changement de type du capteur, un nouveau type de capteur Type(i), tiré aléatoirement parmi l'ensemble des types de capteur disponibles, est substitué à l'ancien type. La probabilité de changement de type est un paramètre du procédé.

Dans une deuxième sous-étape 203-2, toutes les caractéristiques associées au capteur d'indice i sont perturbées selon la méthode de l'étape 203-1. Par exemple, la position du capteur est perturbée en lui ajoutant une valeur aléatoire, par exemple de type Gaussienne. La position du capteur n'est perturbée qu'à une fréquence déterminée par un paramètre de probabilité de changement de position du capteur. Si une contrainte absolue existe sur cette grandeur, par exemple que la position du capteur est restreinte à une zone donnée, la perturbation n'est appliquée qu'en cas de respect de cette contrainte. Cette étape de perturbation s'applique également sur les capteurs de type fictif.

Dans une troisième sous-étape 203-3, on détermine l'acceptabilité de la solution $s'_{n+1}$ obtenue après perturbation de la solution $S_n$. Si la solution $s'_{n+1}$ n'est pas acceptable vis-à-vis des contraintes absolues et si le nombre de tirages $N_{tir}$ d'une solution candidate n'est pas atteint, on retourne à l'étape 203-1 pour déterminer une nouvelle solution candidate $s'_{n+1}$ qui respecte les contraintes absolues. Si aucune solution acceptable n'est déterminée au bout des $N_{tir}$ tirages alors la dernière solution $s'_{n+1}$ obtenue est conservée comme solution courante, $s_{n+1} = s'_{n+1}$.

Dans une deuxième étape 204, la fonction de coût globale C(S) est évaluée pour la solution $s_{n+1}$. Cette évaluation est réalisée à partir de l'évaluation préalable 204-1 de l'ensemble des sous-critères $C_k(S)$ tel que décrit précédemment. Certains de ces sous-critères nécessitent la génération d'une carte d'importance 10.

Dans une troisième étape 205, la nouvelle solution courante est sélectionnée par application d'une adaptation, selon l'invention, de l'algorithme dit du « recuit simulé ». Une probabilité d'acceptation de la nouvelle solution, encore appelée probabilité de transition est évaluée comme une fonction $\eta$ des coûts des solutions $S_n$ et $s_{n+1}$ :

$$P_{transition} = \eta(C(S_n), C(s_{n+1})) \,.$$

Toute fonction $\eta$ conduisant à une plus grande probabilité pour une meilleure solution est acceptable ce qui revient à dire que la probabilité de transition doit être décroissante en fonction de $(C(s_{n+1}) - C(S_n))$. Par exemple, pour un algorithme dit du recuit simulé classique, cette fonction s'écrit à l'aide des relations suivantes :

$$\eta(C(S_n), C(s_{n+1})) = 1 \,, \text{ si } C(s_{n+1}) < C(S_n)$$

$$\eta(C(S_n), C(s_{n+1})) = e^{\frac{C(S_n) - C(s_{n+1})}{T(n)}} \,, \text{ si } C(s_{n+1}) \geq C(S_n)$$

L'étape 205 consiste ainsi à générer une variable aléatoire uniforme u(n) comprise entre 0 et 1 et à la comparer au seuil $\eta(C(S_n), C(s_{n+1}))$. Si u(n) est inférieure audit seuil alors la nouvelle solution $s_{n+1}$ devient la solution courante. Dans le cas contraire la solution $S_n$ est conservée :

$$\text{Si } u(n) < \eta(C(S_n), C(s_{n+1})), S_{n+1} = s_{n+1}$$

$$\text{Si } u(n) \geq \eta(C(S_n), C(s_{n+1})), S_{n+1} = S_n$$

Dans une étape supplémentaire 206, la meilleure des solutions obtenues est mémorisée: si $C(s_{n+1}) < C(S_{best}), S_{best} = S_{n+1}$ A chaque itération, le paramètre de température est modifié afin de rendre moins probable l'acceptation d'une solution moins bonne à l'itération suivante. Pour un algorithme dit du recuit simulé classique, ceci est obtenu par la relation suivante : T(n+1)=ρ T(n) avec ρ une valeur inférieure à 1. Typiquement une valeur très proche de 1 entraine de bons résultats.

Un test d'arrêt 207 est effectué à chaque itération afin de décider l'arrêt de la recherche d'une meilleure solution. Si la condition d'arrêt n'est pas remplie, les itérations sont poursuivies. A titre d'exemple non limitatif, le test d'arrêt peut consister à vérifier si la meilleure solution $S_{best}$ est inchangée depuis au moins $N_{stop}$ itérations, auquel cas le test d'arrêt est positif et le procédé selon l'invention délivre la meilleure solution obtenue. Le test d'arrêt peut également consister à fixer un nombre d'itérations maximum.

Le procédé selon l'invention est mis en oeuvre par le biais d'un programme d'ordinateur. Une interface d'affichage peut être utilisée pour visualiser la position des capteurs formant la solution $S_{best}$ obtenue sur la zone de surveillance déterminée. D'autres caractéristiques desdits capteurs peuvent également être affichées telles la portée ou l'orientation lorsqu'il s'agit d'un capteur directionnel.

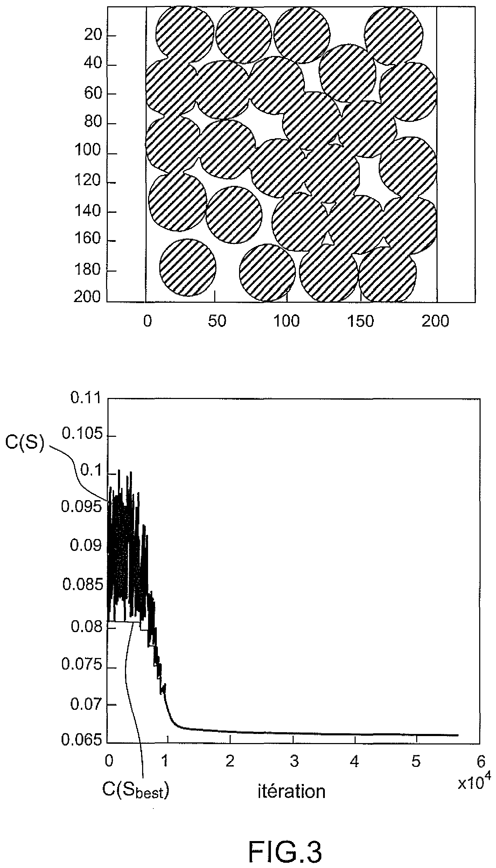

La figure 3 illustre les résultats obtenus par le procédé selon l'invention dans le cas où la zone de surveillance est de forme carrée et uniforme en termes d'importance. Un seul type de capteur est disponible et il présente une probabilité de détection d'une cible égale à 1 pour une distance entre le capteur et la cible inférieure à un rayon de détection D donné et égale à 0 dans le cas contraire. Les contraintes prises en compte sont la maximisation de la zone surveillée avec une carte d'importance uniforme avec un poids et un budget donnés maximum. La partie haute de la figure 3 illustre la position de chaque capteur dans la zone de surveillance avec leur zone de couverture représentée par un cercle centré sur la position du capteur et de rayon égal au rayon de détection. La partie basse de la figure 3 montre l'évolution, au fur et a mesure des itérations du procédé selon l'invention, des fonctions de coût C(S) et C($S_{best}$) des solutions courantes et de la meilleure solution respectivement. A l'arrêt du procédé, le nombre optimal théorique de capteurs, qui est dans l'exemple de la figure 3 égal à 25, est obtenu. La position des capteurs n'est pas régulière car la contrainte imposée est la maximisation de la zone de couverture sans critère de régularité.

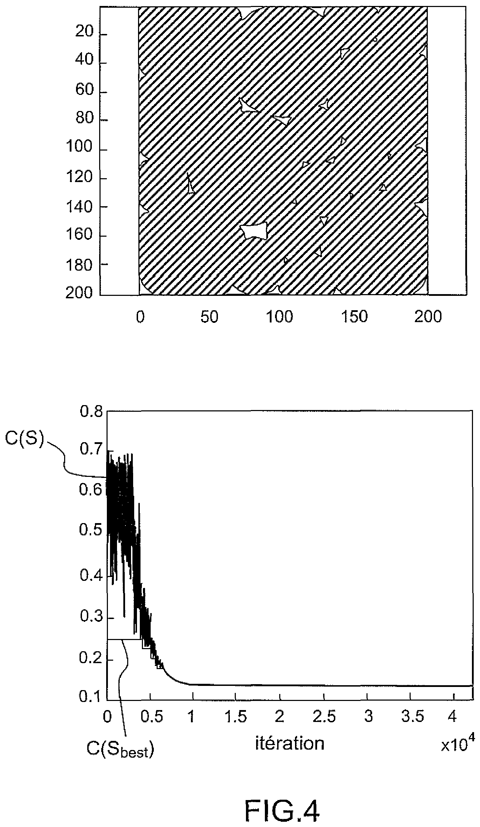

La figure 4 illustre les résultats obtenus pour la même zone de surveillance qu'à la figure 3 mais avec quatre types de senseurs différents présentant des probabilités de détection différentes. On remarque que dans ce cas le taux de couverture est amélioré.

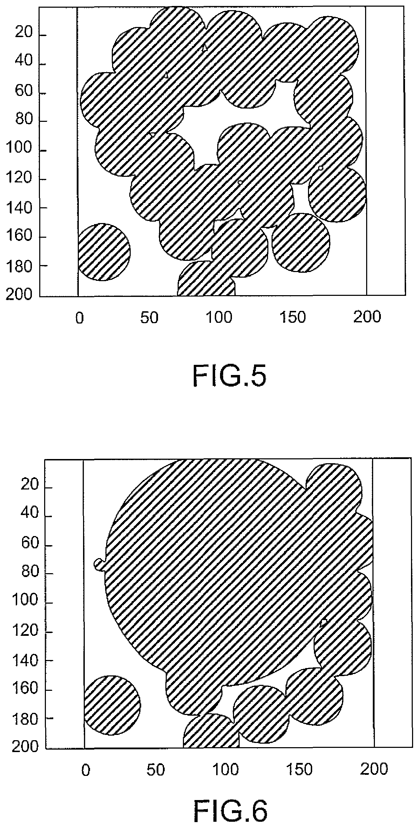

La figure 5 illustre les résultats obtenus pour le placement automatique de capteurs pour une zone de surveillance associée à la carte d'importance de la figure 1. Un seul type de capteur est pris en compte, à savoir le même que celui utilisé pour l'exemple de la figure 3.

La figure 6 illustre les résultats obtenus, toujours pour la carte d'importance de la figure 1, mais en utilisant deux types de capteurs dont l'un présente un rayon de détection sensiblement plus important que l'autre.

L'invention s'applique notamment à la surveillance de sites industriels, de centre ville, d'un bâtiment ou de toute autre zone d'intérêt. Elle permet de déterminer une solution optimale en type, nombre et position d'un ensemble de capteurs de caractéristiques données sous un ensemble de contraintes exprimées sous forme de sous-critères évaluables numériquement. La solution optimale est déterminée en améliorant, à chaque itération du procédé, la solution courante. Le procédé selon l'invention utilise, en partie, la méthode connue dite du « recuit simulé » qui est utilisé généralement pour décrire l'évolution d'un système thermodynamique. Cette méthode est utilisée ici dans un domaine distinct qui est celui de l'optimisation du choix et du positionnement d'un ensemble de capteurs adaptés à surveiller une zone géographique donnée.

Le procédé selon l'invention présente notamment l'avantage de permettre l'obtention d'une solution même lorsque la fonctionnelle de coût C(S) utilisée n'est pas une fonction dérivable en tout point. Il permet également d'éviter de sélectionner une solution dans un extrémum local de cette fonction.

## Revendications

1. Procédé itératif, mis en oeuvre par ordinateur, de conception optimisée d'un système de surveillance d'une zone géographique comportant une pluralité de capteurs de types et caractéristiques différents représentés par un vecteur S dont chaque composante indique le type et les caractéristiques d'un capteur et sa position dans ladite zone, ledit système présentant une pluralité de contraintes techniques absolues non financières que doivent respecter les capteurs dudit système, ledit procédé comportant au moins les étapes suivantes :

   ○ une étape d'initialisation (201) du vecteur S à une solution $S_0$,
   ○ une étape (203) de perturbation des capteurs composant la solution $S_n$ à l'itération d'indice n, pour obtenir une nouvelle solution candidate $s_{n+1}$ à l'itération d'indice n+1, ladite perturbation entrainant le changement du type ou d'une caractéristique d'au moins un desdits capteurs, les types de capteurs possibles incluant également un type fictif dont les caractéristiques sont sans impact sur le coût global de la solution S,
   ○ une étape (204) d'évaluation du coût de ladite solution $s_{n+1}$ à partir d'une fonction de coût global C(S) déterminée comme une combinaison d'une pluralité de sous-critères $C_k(S)$ d'optimisation d'au moins une caractéristique desdits capteurs qui composent la solution S,
   ○ une étape (205) de sélection de la nouvelle solution courante $S_{n+1}$ à l'itération n+1 à partir d'une probabilité de transition $P_{transition} = \eta(C(S_n),C(s_{n+1}))$ décroissante en fonction de $(C(s_{n+1})\text{-}C(S_n))$ aboutissant à la sélection de la nouvelle solution candidate $S_{n+1} = s_{n+1}$ ou à la conservation de la solution précédente $S_{n+1}=S_n$,
   ○ une étape (206) de mémorisation, à chaque itération, de la meilleure solution $S_{best}$ obtenue qui vérifie la relation :

$$\text{si } C(s_{n+1}) < C(S_{best}), S_{best} = S_{n+1},$$

◦ une étape (207) de test d'arrêt ou de poursuite des itérations dudit procédé,
◦ lorsque le test d'arrêt est positif, une étape finale de production de la solution $S_{best}$ optimale contenant le nombre, le type, les caractéristiques et la position des capteurs adaptés à surveiller ladite zone géographique.

2. Procédé selon la revendication 1 **caractérisé en ce qu'**il comporte en outre une étape d'affichage des positions desdits capteurs composant la solution $S_{best}$ optimale dans la zone géographique sur une interface utilisateur.

3. Procédé selon l'une des revendications 1 ou 2 **caractérisé en ce que** l'étape d'initialisation (201) comporte au moins les sous-étapes suivantes :

◦ tirage aléatoire du type de chacun desdits capteurs parmi les types disponibles y compris le type fictif,
◦ tirage aléatoire de la position de chacun desdits capteurs,
◦ vérification du respect, par la solution $S_0$, de toutes les contraintes absolues.

4. Procédé selon l'une des revendications précédentes **caractérisé en ce que** lesdits capteurs sont de type passifs et sont au moins pris dans l'ensemble suivant : une caméra, un radar, un capteur sismique, un capteur acoustique, un dispositif de détection de mouvement, un dispositif de détection par contact électrique, un dispositif de détection de sources radioélectriques, un dispositif de détection de sources nucléaires, un dispositif de détection magnétique, capacitive, inductive, chimique ou bactériologique.

5. Procédé selon l'une des revendications 1 à 3 **caractérisé en ce que** lesdits capteurs sont de type actifs et sont au moins pris dans l'ensemble suivant : un radar, un détecteur acoustique actif, un détecteur LIDAR, un détecteur par activation neutronique, un détecteur par barrière active.

6. Procédé selon l'une des revendications précédentes **caractérisé en ce qu'**une contrainte technique absolue est une contrainte de poids maximal ou de précision de localisation minimum sur une zone géographique donnée.

7. Procédé selon l'une des revendications précédentes **caractérisé en ce qu'**une caractéristique d'un capteur comprend son poids, sa probabilité de détection d'une cible, son rayon de détection.

8. Procédé selon l'une des revendications précédentes **caractérisé en ce qu'**un sous-critère d'optimisation est le poids global de l'ensemble desdits capteurs ou le taux de couverture de la zone surveillée ou la précision de localisation d'une cible dans la zone surveillée, ledit sous-critère étant évaluable numériquement pour l'ensemble des capteurs composant la solution S.

9. Procédé selon la revendication 8 **caractérisé en ce qu'**au moins un des sous-critères dépend d'une carte d'importance qui attribue pour chaque maille, de coordonnées i,j, de la zone géographique à surveiller, une valeur d'importance relative croissante avec le besoin de surveillance de ladite maille.

10. Procédé selon l'une des revendications 8 ou 9 **caractérisé en ce qu'**au moins une des conventions suivantes est appliquée aux sous critères :

◦ l'optimisation des sous-critères est soit une minimisation soit une maximisation,
◦ la valeur de chaque sous-critère est normalisée entre 0 et 1.

11. Procédé selon l'une des revendications précédentes **caractérisé en ce que** la fonction de coût global de la solution S s'exprime à l'aide de la K relation suivante : $C(S) = \sqrt[\beta]{\dfrac{\sum\limits_{k=1}^{K} \lambda_k \left\| C_k(S) \right\|^{\alpha_k}}{\sum\limits_{k=1}^{K} \lambda_k}}$ , où $\lambda_k$ est un coefficient de pondération, $\beta$ et $\alpha_k$ sont des paramètres donnés.

**12.** Procédé selon l'une des revendications précédentes **caractérisé en ce que** la probabilité de transition s'exprime à l'aide des relations suivantes :

$$\eta(C(S_n), C(s_{n+1})) = 1 \text{, si } C(s_{n+1}) < C(S_n)$$

$$\eta(C(S_n), C(s_{n+1})) = e^{\frac{C(S_n) - C(s_{n+1})}{T(n)}} \text{, si } C(s_{n+1}) \geq C(S_n),$$

avec T(n) un paramètre ayant pour effet de rendre moins probable l'acceptation d'une solution moins bonne à l'itération n et respectant la relation suivante T(n+1)=ρT(n), où ρ est un paramètre donné dont la valeur est inférieure à 1 et sensiblement proche de 1.

**13.** Produit programme d'ordinateur **caractérisé en ce qu'**il comprend des instructions de code de programme pour la mise en oeuvre du procédé selon l'une des revendications 1 à 12.

**Patentansprüche**

**1.** Iteratives Verfahren, ausgeführt mit einem Computer, zum optimalen Ausgestalten eines Systems zum Überwachen einer geographischen Region, die mehrere Sensoren unterschiedlicher Typen und Eigenschaften umfasst, repräsentiert durch einen Vektor S, von dem jede Komponente den Typ und die Eigenschaften eines Sensors und seine Position in der Region anzeigt, wobei das System mehrere absolute, nichtfinanzielle technische Beschränkungen hat, die die Sensoren des Systems einhalten müssen, wobei das Verfahren wenigstens die folgenden Schritte beinhaltet:

◦ einen Schritt (201) des Initialisierens des Vektor S auf eine Lösung $S_0$;
◦ einen Schritt (203) des Beeinflussens von Sensoren, die die Lösung $S_n$ ergeben, bei der Iteration von Index n, um eine neue Kandidatenlösung $S_{n+1}$ bei der Iteration von Index n+1 zu erhalten, wobei das Beeinflussen das Ändern des Typs oder einer Eigenschaft von wenigstens einem der Sensoren bewirkt, wobei die möglichen Sensortypen auch einen fiktiven Typ beinhalten, dessen Eigenschaften keinen Einfluss auf die Gesamtkosten der Lösung S haben;
◦ einen Schritt (204) des Beurteilens der Kosten der Lösung $S_{n+1}$ auf der Basis einer Gesamtkostenfunktion C(S), die als eine Kombination von mehreren Subkriterien $C_k(S)$ zum Optimieren von wenigstens einer Eigenschaft der Sensoren bestimmt wird, aus denen sich die Lösung S zusammensetzt;
◦ einen Schritt (205) des Auswählens der neuen aktuellen Lösung $S_{n+1}$ bei der Iteration n+1 auf der Basis einer Übergangswahrscheinlichkeit $P_{transition} = \eta(C(S_n), C(S_{n+1}))$, die in Abhängigkeit von $(C(S_{n+1}) - C(S_n))$ abnimmt, die zur Auswahl der neuen Kandidatenlösung $S_{n+1}= s_{n+1}$ oder zur Konservierung der vorhergehenden Lösung $S_{n+1}= S_n$ führt;
◦ einen Schritt (206) des Speicherns, bei jeder Iteration, der besten erhaltenen Lösung $S_{best}$, die die folgende Relation verifiziert:

$$\text{falls } C(S_{n+1}) < C(S_{best}), S_{best} = S_{n+1};$$

◦ einen Schritt (207) des Testens des Stoppens oder Fortsetzens der Iterationen des Verfahrens;
◦ einen letzten Schritt, wenn das Testen des Stoppens positiv ist, des Produzierens der optimalen Lösung $S_{best}$, die Anzahl, Typ, Eigenschaften und Position der Sensoren enthält, die zum Überwachen der geographischen Region ausgelegt sind.

**2.** Verfahren nach Anspruch 1, **dadurch gekennzeichnet, dass** es ferner einen Schritt des Anzeigens, auf einer Benutzeroberfläche, der Positionen der Sensoren beinhaltet, die die optimale Lösung $S_{best}$ in der geographischen Region ergeben.

3. Verfahren nach Anspruch 1 oder 2, **dadurch gekennzeichnet, dass** der Initialisierungsschritt (201) wenigstens die folgenden Teilschritte beinhaltet:

  ◦ zufälliges Auswählen des Typs jedes der Sensoren aus den verfügbaren Typen, einschließlich dem fiktiven Typ;
  ◦ zufälliges Auswählen der Position jedes der Sensoren;
  ◦ Verifizieren der Einhaltung aller absoluten Beschränkungen durch die Lösung $S_0$.

4. Verfahren nach einem der vorherigen Ansprüche, **dadurch gekennzeichnet, dass** die Sensoren vom passiven Typ sind und wenigstens aus dem folgenden Satz genommen werden: eine Kamera, ein Radar, ein seismischer Sensor, ein akustischer Sensor, ein Bewegungserkennungsgerät, ein Gerät zum Erkennen eines elektrischen Kontakts, ein Gerät zum Erkennen einer RF-Quelle, ein Gerät zum Erkennen einer nuklearen Quelle, ein magnetisches, kapazitives, induktives, chemisches oder bakteriologisches Erkennungsgerät.

5. Verfahren nach einem der Ansprüche 1 bis 3, **dadurch gekennzeichnet, dass** die Sensoren vom aktiven Typ sind und wenigstens aus dem folgenden Satz genommen werden: ein Radar, ein aktiver akustischer Detektor, ein LIDAR-Detektor, ein Detektor mit Neutronenaktivierung, ein Detektor mit aktiver Barriere.

6. Verfahren nach einem der vorherigen Ansprüche, **dadurch gekennzeichnet, dass** eine absolute technische Beschränkung eine Beschränkung mit maximaler Gewichtung oder minimaler Ortungspräzision in einer gegebenen geographischen Region ist.

7. Verfahren nach einem der vorherigen Ansprüche, **dadurch gekennzeichnet, dass** eine Eigenschaft eines Sensors seine Gewichtung, seine Zielerkennungswahrscheinlichkeit, seinen Erkennungsradius umfasst.

8. Verfahren nach einem der vorherigen Ansprüche, **dadurch gekennzeichnet, dass** ein Optimierungssubkriterium die Gesamtgewichtung aller Sensoren oder der Abdeckungsgrad der überwachten Region oder die Ortungspräzision eines Ziels in der überwachten Region ist, wobei das Subkriterium digital für alle Sensoren beurteilt werden kann, die die Lösung S ergeben.

9. Verfahren nach Anspruch 8, **dadurch gekennzeichnet, dass** wenigstens eines der Subkriterien von einer Signifikanzübersicht abhängig ist, die für jede Masche Koordinaten i,j der zu überwachenden geographischen Region zuordnet, wobei ein relativer Signifikanzwert mit dem Überwachungsbedarf der Masche zunimmt.

10. Verfahren nach Anspruch 8 oder 9, **dadurch gekennzeichnet, dass** wenigstens eine der folgenden Konventionen auf die Subkriterien angewendet wird:

  ◦ die Optimierung der Subkriterien ist entweder eine Minimierung oder eine Maximierung;
  ◦ der Wert jedes Subkriteriums ist zwischen 0 und 1 normalisiert.

11. Verfahren nach einem der vorherigen Ansprüche, **dadurch gekennzeichnet, dass** die Gesamtkostenfunktion der Lösung S mittels der folgenden Relation ausgedrückt wird:

$$C(S) = \sqrt[\beta]{\frac{\sum_{k=1}^{K} \lambda_k \|C_k(S)\|^{\alpha_k}}{\sum_{k=1}^{K} \lambda_k}},$$

wobei $\lambda_k$ ein Gewichtungskoeffizient ist, $\beta$ und $\alpha_k$ gegebene Parameter sind.

12. Verfahren nach einem der vorherigen Ansprüche, **dadurch gekennzeichnet, dass** die Übergangswahrscheinlichkeit anhand der folgenden Relationen ausgedrückt wird:

$$\eta(C(S_n), C(s_{n+1})) = 1, \text{ falls } C(s_{n+1}) < C(S_n)$$

$$\eta(C(S_n), C(s_{n+1})) = e^{\frac{C(S_n)-C(s_{n+1})}{T(n)}} , \text{ falls } C(s_{n+1}) \geq C(S_n) ,$$

wobei T(n) ein Parameter ist, dessen Wirkung darin besteht, die Akzeptanz einer weniger guten Lösung bei der Integration n weniger wahrscheinlich zu machen, und die Relation T(n+1) =pT(n) einzuhalten, wobei ρ ein gegebener Parameter ist, dessen Wert kleiner als 1 ist und der im Wesentlichen nahe 1 liegt.

**13.** Computerprogrammprodukt, **dadurch gekennzeichnet, dass** es Programmcode-Befehle zum Implementieren des Verfahrens nach einem der Ansprüche 1 bis 12 umfasst.

**Claims**

**1.** An iterative method, implemented by a computer, for optimally designing a system for monitoring a geographical area, comprising a plurality of sensors having different types and characteristics represented by a vector S, each component of which indicating the type and the characteristics of a sensor and its position in said area, said system having a plurality of absolute non-financial technical constraints that must be complied with the sensors of said system, said method comprising at least the following steps:

- a step (201) of initialising said vector S to a solution So;
- a step (203) of disrupting sensors making up the solution $S_n$ at the iteration of index n in order to obtain a new candidate solution $S_{n+1}$ at the iteration of index n+1, said disruption causing the type or a characteristic of at least one of said sensors to be changed, the types of possible sensors also including a dummy type, the characteristics of which do not affect the overall cost of the solution S;
- a step (204) of assessing the cost of said solution $S_{n+1}$ based on a global cost function C(S) that is determined as a combination of a plurality of sub-criteria $C_k(S)$ for optimising at least one characteristic of said sensors that make up the solution S;
- a step (205) of selecting the new current solution $S_{n+1}$ at the iteration n+1 on the basis of a transition probability $P_{transition} = \eta(C(S_n), C(S_{n+1}))$ that decreases as a function of $(C(S_{n+1}) - C(S_n))$, leading to the selection of the new candidate solution $S_{n+1} = S_{n+1}$ or to the preservation of the preceding solution $S_{n+1} = S_n$;
- a step (206) of storing, upon each iteration, the best solution $S_{best}$ that is obtained, which verifies the following relation:

$$\text{if } C(S_{n+1}) < C(S_{best}), S_{best} = S_{n+1};$$

- a step (207) of testing the termination or the continuation of the iterations of said method;
- a final step, when said testing of termination is positive, of producing the optimal solution $S_{best}$ that contains the number, the type, the characteristics and the position of the sensors that are adapted to monitor said geographical area.

**2.** The method according to claim 1, **characterised in that** it further comprises a step of displaying on a user interface the positions of said sensors that make up the optimal solution $S_{best}$ in the geographical area.

**3.** The method according to claim 1 or 2, **characterised in that** said initialisation step (201) comprises at least the following sub-steps:

- randomly selecting the type of each of said sensors from among the available types, including the dummy type;
- randomly selecting the position of each of said sensors;
- verifying the compliance, by the solution $S_0$, of all of the absolute constraints.

**4.** The method according to any one of the preceding claims, **characterised in that** said sensors are of the passive type and are at least taken from the following set: a camera, a radar, a seismic sensor, an acoustic sensor, a movement detection device, an electric contact detection device, a radioelectric source detection device, a nuclear source detection device, a magnetic, capacitive, inductive, chemical or bacteriological detection device.

5. The method according to any one of claims 1 to 3, **characterised in that** said sensors are of the active type and are at least taken from the following set: a radar, an active acoustic detector, a LIDAR detector, a neutron activation detector, an active barrier detector.

6. The method according to any one of the preceding claims, **characterised in that** an absolute technical constraint is a constraint with maximum weight or minimum localisation precision over a given geographical area.

7. The method according to any one of the preceding claims, **characterised in that** a characteristic of a sensor comprises its weight, its probability of detecting a target, its detection radius.

8. The method according to any one of the preceding claims, **characterised in that** an optimisation sub-criterion is the overall weight of all of said sensors or the level of coverage of the monitored area or the localisation precision of a target in the monitored area, which sub-criterion can be digitally assessed for all of the sensors that make up the solution S.

9. The method according to claim 8, **characterised in that** at least one of the sub-criteria depends on a significance map, which assigns, for each mesh, coordinates i, j of the geographical area to be monitored, with a relative significance value increasing with the monitoring requirement of said mesh.

10. The method according to claim 8 or 9, **characterised in that** at least one of the following conventions is applied to the sub-criteria:

  ◦ the optimisation of the sub-criteria is either a minimisation or a maximisation;
  ◦ the value of each sub-criterion is normalised between 0 and 1.

11. The method according to any one of the preceding claims, **characterised in that** the overall cost function of the solution S is expressed using the following relation:

$$ C(S) = \beta \sqrt{\dfrac{\displaystyle\sum_{k=1}^{K} \lambda_k \left\| C_k(S) \right\|^{\alpha_k}}{\displaystyle\sum_{k=1}^{K} \lambda_k}} \; , $$

where $\lambda_k$ is a weighting coefficient, $\beta$ and $\alpha_k$ are given parameters.

12. The method according to any one of the preceding claims, **characterised in that** the transition probability is expressed using the following relations:

$$ \eta(C(S_n), C(s_{n+1})) = 1 \, , \; \text{if} \; C(s_{n+1}) < C(S_n) $$

$$ \eta(C(S_n), C(s_{n+1})) = e^{\frac{C(S_n) - C(s_{n+1})}{T(n)}} \, , \; \text{if} \; C(s_{n+1}) \geq C(S_n) \, , $$

with T(n) being a parameter, the effect of which is to make the acceptance of a poorer solution at the iteration n less probable, and complying with the following relation T(n+1) =pT(n), where $\rho$ is a given parameter, the value of which is lower than 1 and is substantially close to 1.

13. A computer program product, **characterised in that** it comprises program code instructions for implementing the method according to any one of claims 1 to 12.

EP 2 599 021 B1

FIG.1

16

Initialisation
**201**

Réglage paramètres
**202**

$S_0$

$T(0), \rho$

**203**

**203-1**

**203-2**

**203-3**

$S_n$

$S_{n+1}$

**204**

**10** → **204-1**

$n \leftarrow n+1$

$C(S_{n+1})$

**205**

$S_{n+1}$

**206**

$S_{best}$

**207**

$S_{best}$

# FIG.2

FIG.3

FIG.4

FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7395195 B

- US 7693049 B

**Littérature non-brevet citée dans la description**

- **DE RABIE RAMADAN ; HESHAM EL-REWINI ; KHALED ABDELGHANY.** Optimal and Approximate Approaches for Deployment of Heterogeneous Sensing Devices. *EURASIP Journal on Wireless Communications and Networking,* vol. 2007, 14